# EUROPÄISCHE PATENTSCHRIFT

(11) **EP 0 852 965 B1**
(45) Veröffentlichungstag und Bekanntmachung des Hinweises auf die Patenterteilung: **22.05.2002**
(21) Anmeldenummer: 97118274.6
(22) Anmeldetag: 21.10.1997
(51) Int. Cl.: B01J 3/04, B01J 19/12, B01J 19/00

(54) **Vorrichtung zur Durchführung nasschemischer Reaktionen unter Druck**
Device to perform wet chemical reactions under pressure
Dispositif pour réaliser des réactions chimiques par voie humide sous pression

(30) Priorität: 09.01.1997 DE 19700530
(43) Veröffentlichungstag der Anmeldung: 15.07.1998
(73) Patentinhaber: Perkin Elmer Bodenseewerk Zweigniederlassung der Berthold GmbH & Co. KG, 88662 Überlingen (DE)
(72) Erfinder: Knapp, Günter, Prof. Dr. Dipl.-Ing., 8047 Graz (AT); Kingston, Howard M., Prof. Dr., Cranberry Township PA 16066 (US)
(74) Vertreter: Grünecker, Kinkeldey, Stockmair & Schwanhäusser Anwaltssozietät

(56) Entgegenhaltungen:
- WO-A-93/22650
- DE-A- 4 419 648
- DE-A- 19 506 577

## Beschreibung

Die vorliegende Erfindung betrifft eine Vorrichtung zur Durchführung naßchemischer Reaktionen bei Überdruck mit einem Druckbehälter, in dem eine Reaktionsflüssigkeit vorsehbar ist und der mit einem Verschlußmittel druckdicht verschließbar ist.

Eine solche Vorrichtung ist bereits aus der DE-A 44 19 648 ist bereits ein Druckbehälter mit einer Reaktionsflüssigkeit bekannt, der mit Verschlußmitteln verschießbar ist. Bei der Uberdruckvorrichtung ist keine Spülvorrichtung vorgesehen.

Eine ähnliche Vorrichtung ist auch bereits aus der WO 03/01037 bekannt, die ebenfalls einen Druckbehälter zeigt, in dem ein Reaktionsprodukt vorsehbar ist und der mit einem Verschlußmittel verschließbar ist, wobei bei einer Unterdruckbehandlung eine Spülung vorgeschlagen ist.

Derartige Vorrichtungen zur Durchführung naßchemischer Reaktionen unter Druck sind beispielsweise aus dem US-Patent Nr. 4 882 128 oder den europäischen Patentanmeldungen EP 0 416 759 A1 und EP 0 461 383 A2 bekannt.

Naßchemische Reaktionen, wie das Auflösen und Aufschließen, die Hydrolyse oder die Synthese, haben große Bedeutung für die Analyse und Synthese von Substanzen. Diese verlaufen üblicherweise um so rascher und vollständiger, je höher die Reaktionstemperatur ist. Aus diesem Grund werden nach dem oben erwähnten Stand der Technik geschlossene Reaktionsgefäße verwendet, um bei erhöhtem Druck und damit bei erhöhter Siedetemperatur der Reaktionsflüssigkeit für die naßchemische Reaktion arbeiten zu können. Dazu wird die Reaktionsflüssigkeit in einem Druckbehälter, dessen Inneres mit Druck beaufschlagbar ist, vorgesehen. Bei Erwärmung des Reaktionsgemisches, beispielsweise durch ein von einem Mikrowellengenerator erzeugtes Mikrowellenfeld, erzielt man die erwünschte Steigerung der Reaktionsgeschwindigkeit und öffnet damit neue Möglichkeiten für leistungsfähige Methoden in der Analyse und Synthese von Substanzen.

Geschlossene Reaktionsgefäße haben jedoch verschiedene Nachteile. Der Druck im Gefäß ergibt sich aus der Summe der Partialdrucke der in dem Druckbehälter vorhandenen Stoffe. Der Gesamtdruck setzt sich somit zusammen aus dem Dampfdruck der Reaktionsflüssigkeit sowie den Partialdrucken der gasförmigen Reaktionsprodukte. Aufgrund der begrenzten mechanischen Belastbarkeit des geschlossenen Druckbehälters darf die Summe der Partialdrucke einen bestimmten Maximaldruck nicht überschreiten. Je höher daher die Partialdrucke der während des Reaktionsverlaufs entstehenden gasförmigen Reaktionsprodukte sind, desto niedriger ist der maximal anwendbare Dampfdruck der Reaktionsflüssigkeit. Da der Dampfdruck mit der Temperatur kontinuierlich steigt, ist damit die Temperatur der Reaktionsflüssigkeit nach oben begrenzt.

Beispielsweise entsteht bei einem oxidativen Säureaufschluß von organischen Proben gasförmiges Kohlendioxid. Je mehr organische Substanz in einem bestimmten Druckbehälter bei konstantem Druck aufgeschlossen wird, desto niedriger muß der Dampfdruck der Aufschlußsäure sein und desto niedriger ist daher auch die maximal mögliche Siedetemperatur.

Ein weiterer Nachteil bei der Verwendung von geschlossenen Reaktionsgefäßen besteht darin, daß die gasförmigen Reaktionsprodukte nicht entweichen können und daher das Reaktionsgleichgewicht in Richtung Ausgangsprodukt verschieben.

Im Hinblick auf die Nachteile des Standes der Technik ist es daher die Aufgabe der vorliegenden Erfindung, eine Vorrichtung zur Durchführung naßchemischer Reaktionen unter Druck gemäß der eingangs bezeichneten Art zu schaffen, mit der ein schnellerer und effizienterer Reaktionsablauf erzielbar ist.

Erfindungsgemäß wird diese Aufgabe durch die kennzeichnenden Merkmale des Anspruchs 1 gelöst Die vorliegende Erfindung ermöglicht somit die Durchführung von naßchemischen Reaktionen unter Druck mit kontinuierlichem Abtransport von gasförmigen Reaktionsprodukten, wodurch ein Einfluß der Partialdrucke der gasförmigen Reaktionsprodukte auf den Gesamtdruck im Inneren des Druckbehälters ausgeschlossen wird. Weiter wird die den Reaktionsablauf zunehmend hemmende Verschiebung des Reaktionsgleichgewichts in Richtung der Ausgangsprodukte durch den kontinuierlichen Abtransport der gasförmigen Reaktionsprodukte aus dem mit Druck beaufschlagten Druckbehälter verhindert

Gemäß einer vorteilhaften Weiterbildung umfaßt die Spülvorrichtung eine Quelle für ein unter Druck stehendes Gas sowie eine von der Quelle in das Innere des Druckbehälters führende erste Gasleitung, und weiter eine aus dem Druckbehälter herausführende zweite Gasleitung mit einem ersten Restriktor zur Erzeugung einer vorbestimmten Flußrate. Vorzugsweise umfaßt auch die erste Gasleitung einen Restriktor zur Erzeugung einer vorbestimmten Flußrate. Die erste und zweite Gasleitung mit den jeweiligen ersten und zweiten Restriktoren stellen eine einfache und dennoch wirkungsvolle Ausführungsform für die Spülvorrichtung dar, wobei mit Hilfe der Restriktoren in den ersten und zweiten Gasleitungen die Flußraten für den Zu- und Abfluß eines Spülgases derart voreinstellbar sind, daß ein durch ein Druckeinstellventil vorbestimmter Druck in dem Reaktionsbehälter aufrechterhalten werden kann. Dieser vorbestimmte Druck bestimmt die Siedetemperatur der Reaktionsflüssigkeit

Gemäß einer weiteren vorteilhaften Ausführungsform umfassen der erste und zweite Restriktor jeweils Mittel zur Einstellung einer Flußrate. Damit sind die Bedingungen zur Durchführung naßchemischer Reaktionen beispielsweise in Abhängigkeit von den Reaktionsausgangs- und Endstoffen individuell einstellbar.

Gemäß einer weiteren vorteilhaften Ausführungsform umfaßt die Vorrichtung zur Durchführung naßchemischer Reaktionen unter Druck eine Rekondensierungsvorrichtung innerhalb des Druckbehälters zum Kondensieren von verdampfter Reaktionsflüssigkeit. Durch die Rekondensierungsvorrichtung werden Verluste an Reagenzien und wichtigen Probenbestandteilen verhindert. Damit wird eine weitere Steigerung in der Effizienz der naßchemischen Reaktion unter Druck erzielt.

In vorteilhaften Weiterbildungen ist diese Rekondensierungseinrichtung ausgebildet entweder als Kühlkörper, der derart kühlbar ist, daß die verdampfte Reaktionsflüssigkeit kondensiert, oder als Mittel zur Anströmung mit einem kühlenden Gasstrom eines bezüglich der Richtung der Schwerkraft oberen Bereichs des Reaktionsgefäßes, das in dem Druckbehälter angeordnet ist und in dem die Reaktionsflüssigkeit in einem unteren Bereich vorsehbar ist.

Gemäß einer weiteren vorteilhaften Ausführungsform der Erfindung ist eine Aufheizvorrichtung zur Erhöhung der Temperatur der Reaktionsflüssigkeit vorgesehen. Insbesondere besteht die Aufheizvorrichtung vorteilhafterweise aus einem Mikrowellengenerator zur Erzeugung eines die Reaktionsflüssigkeit durchsetzenden Mikrowellenfelds. Mittels des von dem Mikrowellengenerator erzeugten Mikrowellenfelds kann ein vorbestimmter Temperatur-Zeitverlauf über die Leistung des Mikrowellenfelds exakt gesteuert werden. Bei vorgegebener konstanter Mikrowellenleistung läßt sich ein frei wählbarer Zeit-Temperaturverlauf der Reaktionsflüssigkeit auch durch Steuerung des Drucks im Inneren des Druckbehälters durch das zugeführte und unter Druck stehende Spülgas erzielen, wenn ein regelbares Druckeinstellventil in der in den Druckbehälter führenden Gasleitung verwendet wird.

Gemäß einer weiteren vorteilhaften Ausführungsform ist eine Vorrichtung zur Zuführung von gasförmigen oder flüssigen Reaktionsstoffen in den Druckbehälter vorgesehen. Vorzugsweise umfaßt diese Zuführungsvorrichtung ein Mehrwegventil mit einer Probenschleife, wobei das Mehrwegventil wenigstens in eine erste und eine zweite Stellung schaltbar ist zur Aufnahme einer einzuspeisenden Substanz in der Probenschleife unter einem vorwählbaren Druck in der ersten Stellung und zur Einspeisung der aufgenommenen Substanz in den unter Druck stehenden Druckbehälter in der zweiten Stellung. Mit Hilfe des Mehrwegventils kann eine einzuspeisende Substanz beispielsweise drucklos in die Probenschleife des Mehrwegventils geladen werden, so daß die Menge der einzuspeisenden Substanz genau bestimmbar ist. Bei Schalten des Mehrwegventils in die zweite Stellung wird die in die Probenschleife geladene Substanz unter Druck in den Druckbehälter eingespeist.

Gemäß einer weiteren vorteilhaften Ausführungsform ist ein Temperatursensor zur Bestimmung der Temperatur der Reaktionsflüssigkeit vorgesehen. Insbesondere ist der Temperatursensor in einer tunnelartigen Einbuchtung im Bereich des unten liegenden Endes des Reaktionsgefäßes angeordnet, wodurch eine besonders genaue Temperaturmessung ermöglicht wird.

Weitere vorteilhafte Weiterbildungen gehen aus den Unteransprüchen hervor.

Nachfolgend wird die vorliegende Erfindung beispielhaft anhand bevorzugter Ausführungsformen unter Bezug auf die begleitenden Zeichnungen näher erläutert und beschrieben. In den Zeichnungen zeigen:
- Fig. 1: eine schematische Seitenansicht einer ersten Ausführungsform einer erfindungsgemäßen Vorrichtung zur Durchführung naßchemischer Reaktionen unter Druck;
- Fig.2: eine schematische Seitenansicht einer zweiten Ausführungsform der erfindungsgemäßen Vorrichtung zur Durchführung naßchemischer Reaktionen unter Druck;
- Fig. 3: eine schematische Seitenansicht einer dritten Ausführungsform der Vorrichtung zur Durchführung naßchemischer Reaktionen unter Druck;
- Fig. 4: eine schematische Darstellung eines Mehrwegventils für die in der Fig. 3 gezeigte dritte Ausführungsform in einer ersten Stellung;
- Fig. 5: das in Fig. 4 gezeigte Mehrwegventil in einer zweiten Stellung; und
- Fig. 6: eine schematische Ansicht eines mit einem Temperatursensor versehenen Reaktionsgefäßes.

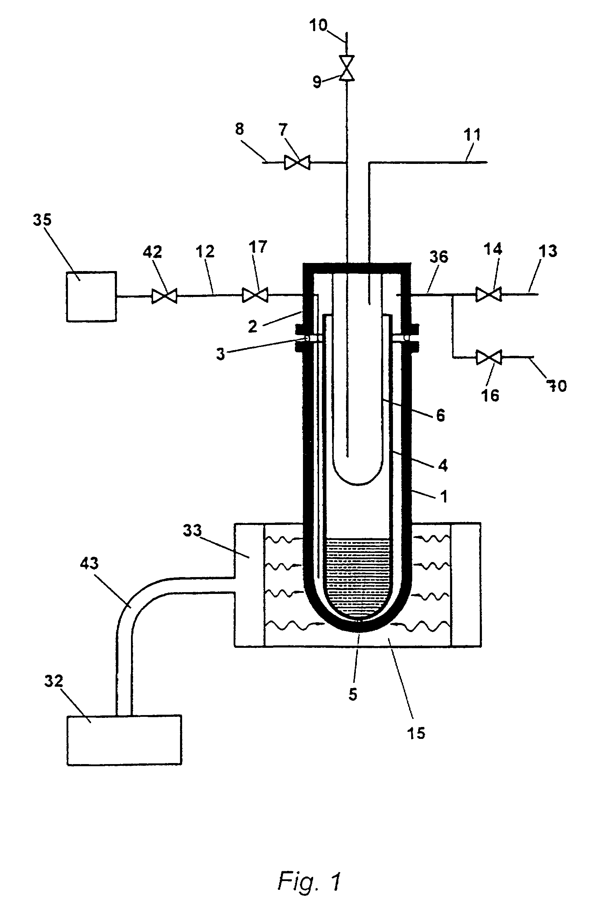

Nachfolgend wird in bezug auf Fig. 1 eine erste Ausführungsform der erfindungsgemäßen Vorrichtung zur Durchführung naßchemischer Reaktionen unter Druck beschrieben. Die Vorrichtung umfaßt einen Druckbehälter 1, der über eine gasdichte Dichtung 3 mit einem Deckel 2 abgeschlossen ist. Innerhalb des Druckbehälters befindet sich ein entnehmbares Reaktionsgefäß 4, in dessen unterem Bereich (bezüglich der Schwerkraft) die in der Zeichnung beispielhaft dargestellte Reaktionsflüssigkeit 5 vorsehbar ist. Der untere Bereich des Druckbehälters und des Reaktionsgefäßes, in dem die Reaktionsflüssigkeit 5 vorzugsweise vorgesehen wird, befindet sich im Inneren eines Mikrowellenresonators 33, der über eine Hohlleitung 43 mit einem Mikrowellengenerator 32 in Verbindung steht. Innerhalb des Mikrowellenresonators 33 ist ein Mikrowellenfeld 15 erzeugbar. Durch den gasdicht angebrachten Deckel 2 des Druckbehälters 1 ist eine erste Gasleitung 12 durchgeführt, die in einem Zwischenraum zwischen dem Reaktionsgefäß 4 und dem Druckbehälter 1 bis in den Bereich des Bodens des Reaktionsgefäßes 4 reicht. In der ersten Gasleitung 12 ist ein Restriktor 17 zur Begrenzung der Gasflußrate durch die erste Gasleitung 12 vorgesehen. Die erste Gasleitung 12 steht weiter über ein Druckeinstellventil 42 mit einer Quelle 35 für ein unter Druck stehendes Spülgas in Verbindung.

Weiter ist durch den Deckel 2 eine zweite Gasleitung 36 geführt, die über einen zweiten Restriktor 14 zur Begrenzung der Durchflußrate durch die zweite Gasleitung zu einer Auslaßleitung 13 durchgeführt. Zwischen dem im Inneren des Druckbehälters liegenden Ende der zweiten Gasleitung 36 und dem Restriktor 14 ist eine Gasleitung 70 abgezweigt, die über ein Ventil 16 mit einer nicht gezeigten Vakuumquelle verbindbar ist.

Im Inneren des Druckbehälters 1 ist ein an dem Deckel 2 angebrachter Kühlkörper 6 in Form eines Kühlfingers vorgesehen. Der Kühlfinger 6 ragt in den oberen Bereich des Reaktionsgefäßes 4. Der Kühlfinger 6 ist innen hohl und über eine durch den Deckel 2 durchgeführte Leitung 8 und ein Ventil 7 mit einer Kühlflüssigkeitsquelle verbunden. Die Leitung 8 für die Kühlflüssigkeit reicht bis nahezu an den Boden des Kühlfingers 6. Zwischen dem Ventil 7 und der Durchführung durch den Deckel 2 ist an die Kühlflüssigkeitsleitung 8 über ein Ventil 9 eine Vakuumleitung 10 angeschlossen. Eine durch den Deckel 2 durchgeführte Ablaufleitung 11 endet im oberen Bereich des hohlen Kühlfingers 6.

Nachfolgend wird der Betrieb der erfindungsgemäßen ersten Ausführungsform beschrieben.

Während der Durchführung einer naßchemischen Reaktion unter Druck kann durch Erzeugung des Mikrowellenfelds 15 die Temperatur der Reaktionsflüssigkeit 5 im Inneren des Reaktionsgefäßes 4 erhöht werden. Dabei entspricht der Druck im Inneren des Druckbehälters 1 immer dem vorgegebenen Druck des Druckeinstellventils 42. Die Temperatur der Reaktionsflüssigkeit 5 kann solange gesteigert werden, bis der Dampfdruck der Flüssigkeit 5 gleich dem mittels Druckeinstellventil 42 vorgelegten Druck entspricht Dann beginnt die Flüssigkeit zu sieden und die Temperatur bleibt konstant

Die während der naßchemischen Reaktion erzeugten gasförmigen Reaktionsprodukte werden durch das von der Quelle 35 in das Innere des Druckbehälters 1 eingespeiste Spülgas aus dem Druckbehälter über die zweite Gasleitung 36 und den Restriktor 14 zum Auslaß kontinuierlich entfernt. Durch das Druckeinstellventil 42 ist der Druck des Spülgases frei einstellbar. Die Temperatur des Reaktionsgemisches kann so weit erhöht werden, bis der Dampfdruck des Reaktionsgemisches dem eingestellten Gasdruck entspricht Die Flußrate des Spülgases wird mit Hilfe des Restriktors 14 eingestellt. Das Ventil 16 zur Vakuumleitung 70 ermöglicht es, den Druckbehälter 1 unter Vakuum zu setzen. In diesem Fall wird der Gasstrom durch den Druckbehälter 1 mit Hilfe des Restriktors 17 eingestellt. Der Restriktor 17 hat einen 10- bis 100fach geringeren Durchflußwiderstand als der Restriktor 14.

Über den Restriktor 14 fließt bei einem bestimmten vorgelegten Druck eine bestimmte Gasmenge in die Leitung 13 ab. Da der Restriktor 17 einen viel geringeren Durchflußwiderstand aufweist als der Restriktor 14, wird über die Leitung 12 immer genügend Gas nachgeliefert, so daß der Druck im Inneren des Druckbehälters 1 stets gleich dem vom Druckeinstellventil 42 vorgegebenen Druck ist. Werden während der Reaktion Gase freigesetzt, fließen diese über den Restriktor 14 ab, wobei entsprechend weniger Spülgas über die Leitung 12 und den Restriktor 17 nachgeliefert wird, da ja die über den Restriktor 14 abfließende Gasmenge bei konstantem Druck in erster Näherung konstant bleibt.

Der Restriktor 17 dient insbesondere auch dazu, die Flüssigkeit 5 rasch bei niedriger Temperatur abdampfen zu können. Dazu wird das Ventil 16 geöffnet und an die Leitung 36 ein Vakuum angelegt. Dadurch wird einerseits über den Restriktor 14 eine unbedeutende Gasmenge nach 70 gesaugt. Es wird jedoch auch das Innere des Druckbehälters 1 unter Vakuum gesetzt, wodurch nun plötzlich über das Druckeinstellventil 42 und die Leitung 12 ein viel zu großer Gasstrom durch den Druckbehälter 1 fließen würde. Der Restriktor 17 begrenzt nun diesen Gasstrom auf ein brauchbares Maß. Dieser reduzierte Gasstrom dient zum Abtransport der Flüssigkeitsdämpfe aus dem Druckbehälter 1.

Der Kühlfinger 6 kann bei geöffnetem Ventil 7 über die Leitung 8 mit Kühlflüssigkeit gefüllt werden, die über die am oberen Ende des Kühlfingers liegende Auslaßleitung 11 abfließt. An dem im oberen Bereich des Reaktionsgefäßes 4 vorhandenen Kühlfinger 6 kondensiert verdampfte Reaktionsflüssigkeit, während die gasförmigen Produkte, wie z.B. Kohlendioxid beim Aufschluß einer organischen Probe, entweichen können. Die rekondensierte Reaktionsflüssigkeit tropft zurück in die im unteren Bereich des Reaktionsgefäßes 4 vorgesehene Reaktionsflüssigkeit 5. Bei geöffnetem Ventil 7 und geschlossenem Ventil 9 zirkuliert über die Kühlflüssigkeitsleitung 8 und die Auslaßleitung 11 Kühlflüssigkeit zur Kühlung durch den Kühlfinger 6. Zur Abdampfung von Reaktionsflüssigkeit 5 aus dem Reaktionsgefäß 4 muß die Kühlflüssigkeit aus dem Kühlfinger 6 entfernt werden. Zu diesem Zweck wird das Ventil 7 geschlossen und das Ventil 9 geöffnet, so daß über die Vakuumleitung 10 die Kühlflüssigkeit aus dem Kühlfinger 6 gesaugt wird.

Die in Fig. 1 gezeigte Ausführungsform ermöglicht somit eine Durchführung naßchemischer Reaktionen mit kontinuierlicher Entfernung von gasförmigen Reaktionsprodukten mit wahlweiser Rückführung verdampfter Reaktionsflüssigkeit in das Reaktionsgefäß 4.

Vorzugsweise ist das Reaktionsgefäß 4 aus dem Druckbehälter 1 entnehmbar, um vor Durchführung der naßchemischen Reaktion die Reaktionsflüssigkeit einfach und problemlos in das Reaktionsgefäß 4 einzufüllen. Anschließend wird das Reaktionsgefäß 4 in den Druckbehälter 1 eingeführt. Der Druckbehälter 1 wird mit dem Deckel 2 mittels der Dichtung 3 gasdicht verschlossen. Es ist möglich, für die Anbringung und Entfernung des Deckels 1 vom Druckbehälter 2 eine Mechanik zur automatischen Beschickung des Druckbehälters 1 mit einer Reaktionsflüssigkeit vorzusehen.

Nachdem die Reaktionsflüssigkeit in den Druckbehälter 1 geladen ist, wird ein für die beabsichtigte Reaktion passendes Temperatur-Zeitprogramm gestartet, wobei die Temperatur der Reaktionsflüssigkeit 5 über die Leistung des Mikrowellenfelds 15 geregelt wird. Die maximale Temperatur ergibt sich aus der Dampfdruckkurve der Reaktionsflüssigkeit 5 entsprechend dem über das Ventil 42 und den Restriktor 14 angelegten Druck im Inneren des Druckbehälters 1. Ein vorgegebenes Zeit-Temperaturprogramm kann auch dadurch verwirklicht werden, daß eine konstante Leistung des Mikrowellenfelds 15 verwendet wird, die ausreichend ist, die Reaktionsflüssigkeit 5 auch bei hoher Siedetemperatur zum Sieden zu bringen. Durch geeignete Einstellung des Spülgasdrucks im Druckbehälter 1 mittels des Druckeinstellventils 42 wird die Siedetemperatur der Reaktionsflüssigkeit 5 in gewünschter Weise eingestellt. Mit Hilfe des Kühlfingers 6 wird die verdampfte Flüssigkeit kondensiert und laufend in das Reaktionsgefäß 4 zurückgeführt.

Mit der in Fig. 1 gezeigten erfindungsgemäßen Vorrichtung kann die Reaktionsflüssigkeit 5 teilweise oder vollständig verdampft werden. Zu diesem Zweck wird die Kühlflüssigkeit aus dem Kühlfinger 6 mittels der Vakuumleitung 10 bei geöffnetem Ventil 9 abgesaugt. Das Ventil 7 ist zu diesem Zeitpunkt geschlossen. Um die Siedetemperatur während des Verdampfungsvorgangs herabzusetzen, wird das Innere des Druckbehälters 1 durch Öffnen des Ventils 16 mit der Vakuumleitung 70 verbunden und evakuiert. Die verdampfte Flüssigkeit wird mit dem Spülgas aus der ersten Gasleitung 12 über das Ventil 16 und die Vakuumleitung 70 abgeführt Die Flußrate des Spülgases wird mit Hilfe des Restriktors 17 eingestellt.

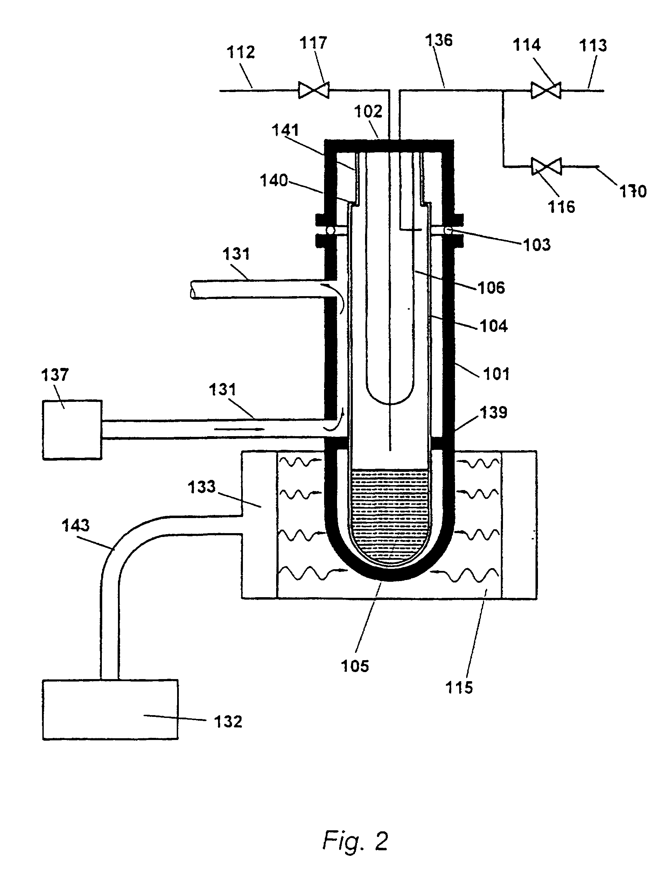

In Fig. 2 ist eine schematische Seitenansicht einer zweiten Ausführungsform der erfindungsgemäßen Vorrichtung zur Durchführung naßchemischer Reaktionen unter Druck gezeigt. Die zu der ersten Ausführungsform gleichen oder ähnlichen Elemente sind in Fig. 2 durch entsprechende, jedoch um 100 erhöhte Bezugszeichen bezeichnet. Eine ausführliche Beschreibung der bereits für die erste Ausführungsform in bezug auf Fig. 1 beschriebene Elemente und ihrer Funktion wird für die zweite Ausführungsform unterlassen, wobei auf die entsprechende Beschreibung bezüglich der Fig. 1 verwiesen wird.

Die zweite Ausführungsform gemäß Fig. 2 unterscheidet sich von der ersten Ausführungsform dadurch, daß anstelle oder zusätzlich zu dem Kühlfinger eine Rekondensierungsvorrichtung in Form eines Mittels zur Anströmung eines bezüglich der Richtung der Schwerkraft oberen Bereichs des Reaktionsgefäßes mit einem kühlenden Gasstrom vorgesehen ist. Das Mittel zur Anströmung mit einem kühlenden Gasstrom umfaßt eine Kühlgasquelle 137, die über eine Kühlgasleitung 131 mit dem Inneren des Druckbehälters 101 in einem oberen Bereich des Reaktionsgefäßes verbunden ist. Die Gasleitung 131 ist an einer zweiten Stelle aus dem Druckbehälter wieder herausgeführt. Der untere Bereich des Druckbehälters 101, in dem die Reaktionsflüssigkeit 105 in dem Reaktionsgefäß 104 vorsehbar ist, ist vorzugsweise, aber nicht notwendigerweise über eine Dichtung 139 von dem mit dem Kühlgas aus der Kühlgasquelle 137 angeströmten Bereich gasdicht getrennt. Zur Verhinderung einer Durchmischung des Kühlgases aus der Quelle 137 mit dem Spülgas aus einer Quelle 112 kann eine weitere Abdichtung 140 zwischen einem Vorsprung 141 des Deckels 102 und dem Reaktionsgefäß 104 vorgesehen sein. Die erste Gasleitung 112 zur Einspeisung des Spülgases über den Restrikor 117 und die zweite Gasleitung 136 zur Entfernung des Spülgases und der gasförmigen Reaktionsprodukte über den zweiten Restriktor 114 an den Auslaß 113 sind entweder durch den zusätzlich vorhandenen Kühlfinger 106 durchgeführt oder verlaufen parallel dazu.

Der Betrieb der zweiten Ausführungsform der erfindungsgemäßen Vorrichtung zur Durchführung naßchemischer Reaktionen unter Druck erfolgt entsprechend zu dem der in bezug auf Fig. 1 beschriebenen ersten Ausführungsform. Die Kühlung zur Rekondensierung verdampfter Reaktionsflüssigkeit kann jedoch nach der zweiten Ausführungsform alternativ oder zusätzlich durch Kühlung des oberen Bereichs des Reaktionsgefäßes mittels des über die Leitung 131 von der Quelle 137 zirkulierten Kühlgases erfolgen.

Der Einfachheit halber sind in Fig. 2 die Leitungen zum Befüllen und zum Entleeren des Kühlfingers 106 weggelassen. Der Kühlfinger gemäß der zweiten Ausführungsform kann jedoch mit den gleichen Anschluß- und Entsorgungsleitungen wie in der ersten Ausführungsform versehen sein.

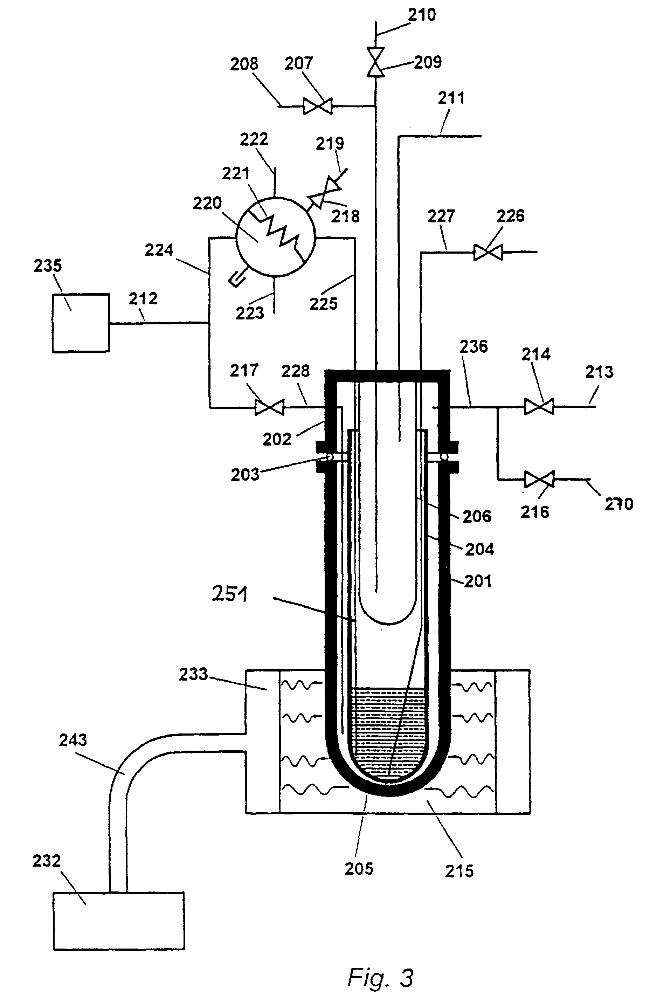

In Fig. 3 ist eine dritte Ausführungsform der erfindungsgemäßen Vorrichtung zur Durchführung naßchemischer Reaktionen unter Druck gezeigt Wieder sind die zu der ersten Ausführungsform ähnlichen oder identischen Elemente mit entsprechenden, diesmal jedoch um 200 erhöhten Bezugszeichen bezeichnet. Eine ausführliche Beschreibung dieser Elemente der dritten Ausführungsform wird an dieser Stelle unterlassen und es wird auf die entsprechende Beschreibung dieser Elemente und ihrer Funktion in Zusammenhang mit der ersten Ausführungsform verwiesen.

Die dritte Ausführungsform unterscheidet sich von der ersten Ausführungsform dadurch, daß ein zusätzliches System zur Zuführung von gasförmigen oder flüssigen Reaktionsstoffen in das Reaktionsgefäß sowie eine Entnahmeleitung 227 mit einem Ventil 226 zur Entnahme von Reaktionsflüssigkeit 205 aus dem Reaktionsgefäß 204 vorgesehen ist.

Die Vorrichtung zur Zuführung von gasförmigen oder flüssigen Reaktionsstoffen umfaßt ein Mehrwegventil 220 mit einer Probenschleife 221. Das Mehrwegventil besitzt 8 Anschlüsse a, b, c, d, e, f, g und h. Die Anschlüsse a und e sind mit der Probenschleife 221 verbunden. Der Anschluß b ist mit der Leitung 222, der Anschluß c mit dem Ventil 218, der Anschluß d mit der Leitung 225, der Anschluß f mit der Leitung 223 und der Anschluß h mit der Leitung 224 verbunden. Der Anschluß g ist dicht verschlossen. Die Leitung 222 ist beispielsweise mit einem Vorrat einer Reaktionsflüssigkeit verbunden. Die Leitung 223 kann in diesem Fall mit einem Auslaß oder einem Abfallsammelbehälter verbunden sein. Die Leitung 224 ist mit der ersten Gasleitung 212 und der Quelle 235 für das unter Druck stehende Spülgas verbunden. Die Leitung 225 ist mit einer durch den Deckel 202 durchgeführten, in das Innere und bis zum Boden des Reaktionsgefäßes 204 reichenden Leitung 251 verbunden.

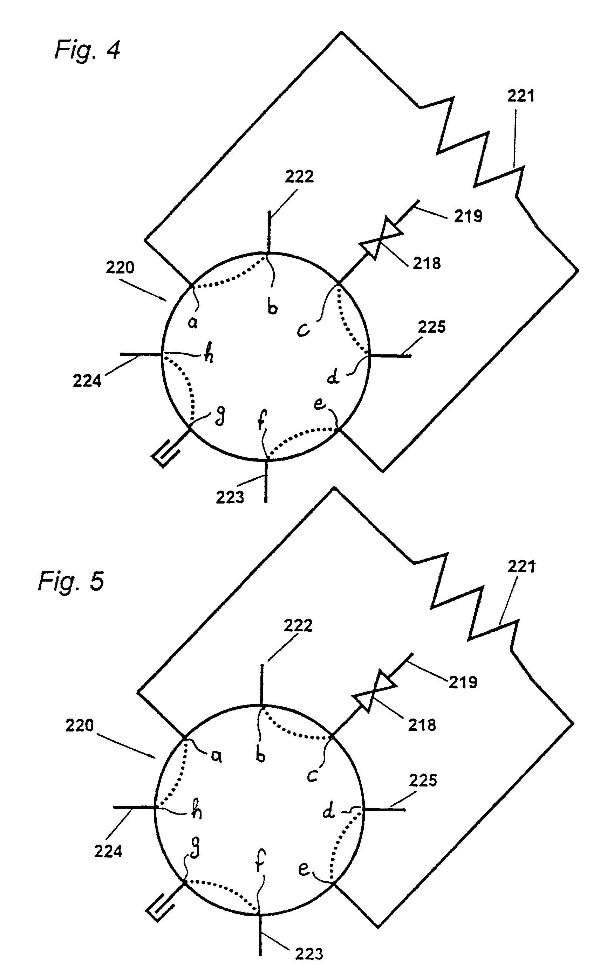

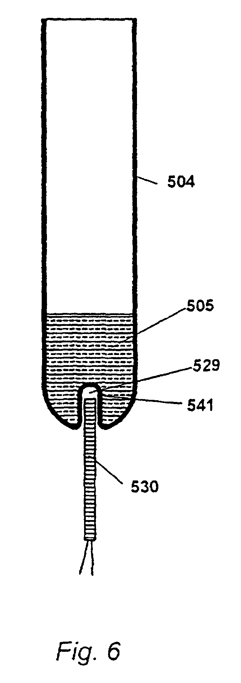

In den Figuren 4 und 5 sind eine erste und zweite Stellung des in Fig. 3 gezeigten Mehrwegventils 220 dargestellt. In der in Fig. 4 gezeigten ersten Stellung ist ein Ende der Probenschleife 221 mit dem Anschluß a, und das zweite Ende der Probenschleife 221 mit dem Anschluß e verbunden. Damit kann über die Leitung 222 die Probenschleife 221 mit einem flüssigen Reagenz unabhängig vom Druck innerhalb des Druckbehälters 1 gefüllt werden.

Bei Umschaltung des Mehrwegventils 220 von der ersten zu der in Fig. 5 gezeigten zweiten Stellung wird das eine Ende der Probenschleife 221 mit der Leitung 224 und das andere Ende der Probenschleife 221 mit der Leitung 225 verbunden. Damit wird die Probenschleife 221 an die unter Druck stehende Spülgasleitung 212 angeschlossen. Durch den Druck des Spülgases wird das in der Probenschleife 221 enthaltene Reagenz über die Leitung 225 und die durch den Deckel 202 geführte Leitung 251 in das Reaktionsgefäß 204 gefördert. Dabei wird auch in der dritten Ausführungsform die Siedetemperatur durch den gewählten Druck des Spülgases bestimmt.

Während in der in Fig. 4 gezeigten ersten Stellung die Probenschleife über die Leitung 222 beispielsweise mit einem flüssigen Reagenz gefüllt wird, ist die Leitung 225, die über die durch den Deckel 202 durchgeführte Leitung 251 mit dem Inneren des Reaktionsgefäßes in Verbindung steht, mit einer Gasleitung 219 über ein Ventil 218 verbunden. Über die Gasleitung 219 kann in der ersten Stellung, z.B. während der Zeit des Befüllens der Probenschleife 221 ein gasförmiges Reagenz, z.B. ein Halogen oder Ozon, aus der Leitung 219 und über die Leitung 225 in die Reaktionsflüssigkeit 205 eingebracht werden. Damit ist eine kontinuierliche Zuführung von gasförmigen Reagenzien bei geöffnetem Ventil 218 in der ersten Stellung des Mehrwegventils 220 möglich.

Zur diskontinuierlichen Einspeisung von Reagenzien wird das Ventil 218 geschlossen und das jeweils in der ersten Stellung in die Probenschleife 221 gefüllte Reagenz durch Umschalten in die in der Fig. 5 gezeigte zweite Stellung eingespeist. Nach Beendigung der Einspeisung des in der Probenschleife 221 enthaltenen Reagenz wird das Mehrwegventil 220 aus der zweiten Stellung wieder in die erste Stellung zurückgeschaltet, um den Befüllungs- und Einspeisungsvorgang erneut zu beginnen.

Obwohl die in Fig. 3 dargestellte dritte Ausführungsform nur mit dem Kühlfinger 206 zum Rekondensieren verdampfter Reaktionsflüssigkeit dargestellt ist, ist selbstverständlich auch die Art der Rekondensierung gemäß der in Fig. 2 dargestellten zweiten Ausführungsform möglich.

Der Abtransport der Reaktionsflüssigkeit 205 aus dem Reaktionsgefäß 204 kann auch unter Druck mit Hilfe des Drucks des Spülgases in dem Druckbehälter 201 erfolgen. Dazu wird das Ventil 226 in der Ablaßleitung 227 geöffnet, wobei durch den im Inneren herrschenden Druck die Reaktionsflüssigkeit 205 in die am Boden des Reaktiongsgefäßes 204 ansetzende Ablaßleitung 227 gedrückt wird. Zur anschließenden Spülung des Reaktionsgefäßes 204 werden nacheinander bestimmte Volumina einer geeigneten Spülflüssigkeit über das Mehrwegventil 220 zugeführt.

Vorzugsweise ist die erfindungsgemäße Vorrichtung zur Durchführung naßchemischer Reaktionen unter Druck mit einem in Fig. 6 gezeigten Temperatursensor versehen. Der Temperatursensor, bei dem es sich um ein Thermoelement, einen Widerstandsfühler, einen Infrarotsensor oder eine Glasfaseroptik mit Fluoreszenzmessung handeln kann, ist gasdicht durch den Druckbehälter geführt und in einer kanalförmigen Einbuchtung 529 am Boden 541 des Reaktionsgefäßes 504 angeordnet. Durch die in Fig. 6 gezeigte Ausführungsform des Reaktionsgefäßes 4 und die Anbringung des Temperatursensors 530 ist eine genaue Messung der Temperatur der Reaktionsflüssigkeit möglich.

Für das einfache Oxidieren von organischen Proben genügt eine einfache Version der Apparatur ohne Einrichtung zum Abdampfen der Reaktionslösung. Dabei braucht die Kühlflüssigkeit nicht abgesaugt zu werden. Daher fallen in dieser einfachen Form die mit den Bezugszeichen 9 und 10 bezeichneten Elemente weg. Da kein Vakuum angelegt wird, fallen auch die mit den Bezugszeichen 16, 70 und 17 bezeichneten Elemente weg.

In allen der zuvor beschriebenen Ausführungsformen ist vorzugsweise das Reaktionsgefäß aus PTFE oder aus Quarz. Für das Reaktionsgefäß können verschiedene fluorierte Polymere, wie z.B. PTFE, PFA oder PTFE-TFM, verwendet werden. Bei Verwendung von Gefäßen aus PTFE können bei Mikrowellenbeheizung Temperaturen von bis zu 250°C angewendet werden. Bei Verwendung von Quarzgefäßen können bei der Mikrowellenbeheizung Temperaturen von bis über 300°C angewendet werden.

Nachfolgend wird die erfindungsgemäße Vorrichtung mit einer nach dem Stand der Technik bekannten, handelsüblichen Vorrichtung zur Durchführung naßchemischer Reaktionen unter Druck mit Mikrowellenheizung verglichen. Das handelsübliche System ist ein von der Fa. Anton Paar, in Graz/Österreich, hergestelltes System der Bezeichnung PMD. Bei den Vergleichsuntersuchungen werden 50 ml fassende Reaktionsgefäße verwendet, in denen jeweils 100 mg, 130 mg bzw. 160 mg Sorbit-mono-laurat mit 2 ml Salpetersäure oxidiert werden. Dabei wird die jeweilige Probenmenge in das 50 ml fassende Reaktionsgefäß aus Quarzglas gegeben und mit den 2 ml Salpetersäure (65 %) versetzt Das Gefäß wird verschlossen und 10 Minuten in der handelsüblichen PMD-Vorrichtung bei einem Reaktionsdruck von 30 bar behandelt Bei 100 mg Einwaage werden 88 % der Probe oxidiert, bei 130 mg Einwaage 80 % und bei 160 mg Einwaage werden nur mehr 68 % der Probe oxidiert.

In der erfindungsgemäßen Vorrichtung werden die gleichen Probenmengen ebenfalls in 50 ml fassenden Quarzgefäßen in dem dynamischen Drucksystem mit jeweils 2 ml Salpetersäure (65 %) ebenfalls bei einem Druck von 30 bar oxidiert Als Spülgas wird Stickstoff verwendet Die Flußrate für das Spülgas beträgt 100 ml pro Minute. Die Reaktion wird 10 Minuten bei einer Mikrowellenleistung von 600 W durchgeführt. Mit diesem Verfahren werden unabhängig von der Probeneinwaage 95 % des Sorbit-monolaurat zu CO₂ und H₂O oxidiert.

## Patentansprüche

1. Vorrichtung zur Durchführung naßchemischer Reaktionen bei Überdruck mit
einem Druckbehälter (1), in dem eine Reaktionsflüssigkeit (5) vorsehbar ist und der mit einem Verschlußmittel (2, 3) druckdicht verschließbar ist, **dadurch gekennzeichnet, daß**
eine Spülvorrichtung vorgesehen ist zum Spülen des Druckbehälters unter Abtransport von gasförmigen Reaktionsprodukten aus dem unter Überdruck stehenden Druckbehälter, und
eine Einrichtung (17, 42, 14) zur Aufrechterhaltung einer vorbestimmten Überdruckbeaufschlagung während der Spülung.

2. Vorrichtung nach Anspruch 1, **dadurch gekennzeichnet, daß** die Spülvorrichtung eine Quelle (35) für ein unter Druck stehendes Gas umfaßt, sowie eine von der Quelle (35) in das Innere des Druckbehälters führende erste Gasleitung (12), und weiter eine aus dem Druckbehälter herausführende zweite Gasleitung (36) mit einem ersten Restriktor (14) zur Erzeugung einer ersten vorbestimmten Flußrate.

3. Vorrichtung nach Anspruch 2, **dadurch gekennzeichnet, daß** in der ersten Gasleitung (12) ein zweiter Restriktor (17) zur Erzeugung einer vorbestimmten zweiten Flußrate vorgesehen ist.

4. Vorrichtung nach Anspruch 2, **dadurch gekennzeichnet, daß** ein Druckeinstellventil (42) in der ersten Gasleitung (12) vorgesehen ist zur Einstellung des Drucks des unter Druck stehenden Gases auf einen vorbestimmten Wert

5. Vorrichtung nach einem der vorhergehenden Ansprüche, **dadurch gekennzeichnet, daß** eine Rekondensierungsvorrichtung innerhalb des Druckbehälters vorgesehen ist zum Kondensieren von verdampfter Reaktionsflüssigkeit.

6. Vorrichtung nach Anspruch 5, **dadurch gekennzeichnet, daß** die Rekondensierungsvorrichtung einen Kühlkörper (6) umfaßt, der auf eine Temperatur kühlbar ist, daß verdampfte Reaktionsflüssigkeit kondensiert.

7. Vorrichtung nach Anspruch 6, **dadurch gekennzeichnet, daß** der Kühlkörper mit einer Kühlflüssigkeit befüllbar ist.

8. Vorrichtung nach Anspruch 7, **dadurch gekennzeichnet, daß** die Kühlflüssigkeit durch den Kühlkörper zirkulierbar ist

9. Vorrichtung nach Anspruch 7 oder 8, **dadurch gekennzeichnet, daß** die Kühlflüssigkeit aus dem Kühlkörper entfernbar ist.

10. Vorrichtung nach Anspruch 9, **dadurch gekennzeichnet, daß** eine Saugleitung (10) zur Entfernung der Kühlflüssigkeit aus dem Kühlkörper vorgesehen ist.

11. Vorrichtung nach Anspruch 5, **dadurch gekennzeichnet, daß** die Rekondensierungsvorrichtung ein Mittel (131, 137) umfaßt zur Anströmung mit einem kühlenden Gasstrom eines bezüglich der Richtung der Schwerkraft oberen Bereichs eines Reaktionsgefäßes (104), das in dem Druckbehälter angeordnet ist und in dem die Reaktionsflüssigkeit in einem unteren Bereich vorsehbar ist.

12. Vorrichtung nach Anspruch 11, **dadurch gekennzeichnet, daß** das Mittel zum Anströmen mit einem kühlenden Gasstrom eine Quelle (137) für das kühlende Gas und Zuund Abführleitungen (131) für das kühlende Gas umfaßt, sowie Mittel (139, 140) zur gasdichten Trennung eines ersten Teils des Druckbehälters, in dem sich der von dem kühlenden Gas umströmte Bereich des Reaktionsgefäßes befindet vom restlichen Teil des Druckbehälters.

13. Vorrichtung nach einem der vorhergehenden Ansprüche, **dadurch gekennzeichnet, daß** eine Aufheizvorrichtung zur Erhöhung der Temperatur der Reaktionsflüssigkeit (5) vorgesehen ist.

14. Vorrichtung nach Anspruch 13, **dadurch gekennzeichnet, daß** die Aufheizvorrichtung einen Mikrowellengenerator (32) zur Erzeugung eines die Reaktionsflüssigkeit (5) durchsetzenden Mikrowellenfelds (15) umfaßt

15. Vorrichtung nach Anspruch 14, **dadurch gekennzeichnet, daß** das Mikrowellenfeld wenigstens in einem Bereich des Druckbehälters, in dem die Reaktionsflüssigkeit vorsehbar ist, erzeugbar ist, und daß die Wände des Druckbehälters in diesem Bereich mikrowellentransparent sind.

16. Vorrichtung nach Anspruch 1, **dadurch gekennzeichnet, daß** ein Reaktionsgefäß in dem Druckbehälter zur Aufnahme der Reaktionsflüssigkeit vorgesehen ist.

17. Vorrichtung nach Anspruch 16, **dadurch gekennzeichnet, daß** die Wände des Reaktionsgefäßes aus PTFE, PFA, PTFE-TFM oder Quarzglas hergestellt sind.

18. Vorrichtung nach einem der vorhergehenden Ansprüche, **dadurch gekennzeichnet, daß** eine Zuführungsvorrichtung zur Zuführung von gasförmigen oder flüssigen Reaktionsstoffen in das Innere des Druckbehälters bei druckdichtem Verschluß durch das Verschlußmittel (2, 3) vorgesehen ist

19. Vorrichtung nach Anspruch 18, **dadurch gekennzeichnet, daß** die Zuführungsvorrichtung ein Mehrwegventil (220) mit einer Probenschleife (221) umfaßt, das in wenigstens eine erste und eine zweite Stellung schaltbar ist zur Aufnahme einer einzuspeisenden Substanz unter einem vorwählbaren Druck in der Probenschleife in der ersten Stellung und zur Einspeisung der aufgenommenen Substanz in den unter Druck stehenden Druckbehälter in der zweiten Stellung.

20. Vorrichtung nach Anspruch 19, **dadurch gekennzeichnet, daß** in der zweiten Stellung des Mehrwegventils ein Ende der Probenschleife mit einer Quelle (235) eines unter Druck stehenden Spülgases verbunden ist und das andere Ende der Probenschleife mit einer in den Druckbehälter führenden Leitung (225) verbunden ist

21. Vorrichtung nach einem der Ansprüche 19 oder 20, **dadurch gekennzeichnet, daß** in der ersten Stellung oder einer weiteren dritten Stellung gasförmige Reagenzien in das Reaktionsgefäß unter voreinstellbarer Flußrate zuführbar sind.

22. Vorrichtung nach einem der vorhergehenden Ansprüche, **dadurch gekennzeichnet, daß** ein Temperatursensor (530) zur Bestimmung der Temperatur der Reaktionsflüssigkeit (505) vorgesehen ist.

23. Vorrichtung nach Anspruch 22, **dadurch gekennzeichnet, daß** der Temperatursensor in einer tunneiartigen Einbuchtung (529) im Bereich des unten liegenden Endes eines Reaktionsgefäßes (504), das in dem Druckbehälter angeordnet ist und in dem die Reaktionsflüssigkeit in einem unteren Bereich vorsehbar ist, angeordnet ist.

24. Vorrichtung nach Anspruch 22 oder 23, **dadurch gekennzeichnet, daß** der Temperatursensor (530) ein Thermoelement, ein Widerstandsfühler, ein Infrarotsensor oder eine Glasfaseroptik mit Fluoreszenzmessung ist

25. Vorrichtung nach einem der vorhergehenden Ansprüche, **dadurch gekennzeichnet, daß** eine in das Innere des Druckbehälters führende und am Boden eines Aufnahmebehälters für die Reaktionsflüssigkeit ansetzende Abführleitung (227), mit der die Reaktionsflüssigkeit ableitbar ist, vorgesehen ist.

26. Vorrichtung nach einem der vorhergehenden Ansprüche, **dadurch gekennzeichnet, daß** eine in das Innere des Druckbehälters führende Saugleitung (70, 170, 270) zur Erzeugung eines Unterdrucks vorgesehen ist.

## Claims

1. An apparatus for carrying out wet chemical reactions under pressure higher than atmospheric pressure comprising
a pressure vessel (1) in which a reaction liquid (5) can be provided and which is adapted to be sealed in a pressure-tight manner by closure means (2, 3), **characterized in**
**that** a rinsing device is provided for rinsing the pressure vessel while removing gaseous reaction products from the pressurized pressure vessel and
a means (17, 42, 14) for maintaining an application of a predetermined pressure higher than atmospheric pressure during the rinsing process.

2. An apparatus according to claim 1, **characterized in that** said rinsing device comprises a source (35) for a pressurized gas as well as a first gas conduit (12) extending from said source (35) into the interior of the pressure vessel, and, in addition, a second gas conduit (36) extending from the interior of said pressure vessel to the outside thereof and including a first restrictor (14) for producing a first predetermined flow rate.

3. An apparatus according to claim 2, **characterized in that** a second restrictor (17) is provided in said first gas conduit (12) so as to produce a predetermined second flow rate.

4. An apparatus according to claim 2, **characterized in that** a pressure regulator valve (42) is provided in said first gas conduit (12) for adjusting the pressure of the pressurized gas to a predetermined value.

5. An apparatus according to one of the preceding claims, **characterized in that** a recondensation device is provided in the interior of the pressure vessel, said recondensation device being used for condensing evaporated reaction liquid.

6. An apparatus according to claim 5, **characterized in that** said recondensation device comprises a cooling body (6) which is adapted to be cooled down to a temperature at which evaporated reaction liquid condenses.

7. An apparatus according to claim 6, **characterized in that** said cooling body can be filled with a cooling liquid.

8. An apparatus according to claim 7, **characterized in that** said cooling liquid can be caused to circulate through the cooling body.

9. An apparatus according to claim 7 or 8, **characterized in that** the cooling liquid can be removed from said cooling body.

10. An apparatus according to claim 9, **characterized in that** a suction conduit (10) is provided for removing the cooling liquid from said cooling body.

11. An apparatus according to claim 5, **characterized in that** said recondensation device comprises means (131, 137) for applying a cooling gas stream to an area of a reaction vessel (104) constituting an upper area with regard to the direction of the force of gravity, said reaction vessel being arranged in the pressure vessel and being adapted to hold the reaction liquid in a lower area thereof.

12. An apparatus according to claim 11, **characterized in that** said means for applying a cooling gas stream comprises a source (137) for the cooling gas and supply and discharge conduits (131) for the cooling gas as well as means (139, 140) for a gas-tight separation of the first part of the pressure vessel from the residual part of the pressure vessel, the area of the reaction vessel around which the cooling gas flows being located in said first part of the pressure vessel.

13. An apparatus according to one of the preceding claims, **characterized in that** a heating device is provided for increasing the temperature of the reaction liquid (5).

14. An apparatus according to claim 13, **characterized in that** said heating device comprises a microwave generator (32) for generating a microwave field (15) passing through the reaction liquid (5).

15. An apparatus according to claim 14, **characterized in that** said microwave field can be generated at least in an area of the pressure vessel in which the reaction liquid can be provided, and that the walls of the pressure vessel are microwave-transparent in this area.

16. An apparatus according to claim 1, **characterized in that** a reaction vessel is provided in the pressure vessel for receiving therein the reaction liquid.

17. An apparatus according to claim 16, **characterized in that** the walls of the reaction vessel consist of PTFE, PFA, PTFE-TFM or of quartz glass.

18. An apparatus according to one of the preceding claims, **characterized in that** a feed device is provided for feeding gaseous or liquid reaction substances into the interior of the pressure vessel while said pressure vessel is sealed in a pressure-tight manner by said closure means (2, 3).

19. An apparatus according to claim 18, **characterized in that** said feed device comprises a multiway valve (220) with a sample loop (221), said multiway valve being adapted to be switched at least to a first and to a second position for receiving in said sample loop a substance to be fed under a preselectable pressure at said first position and for feeding the received substance into the pressurized pressure vessel at said second position.

20. An apparatus according to claim 19, **characterized in that,** at the second position of the multiway valve, one end of the sample loop is connected to a source (235) of pressurized purge gas and the other end of the sample loop is connected to a conduit (225) leading into the pressure vessel.

21. An apparatus according to one of the claims 19 or 20, **characterized in that** at said first position or at an additional third position reagents can be fed to the reaction vessel at a predeterminable flow rate.

22. An apparatus according to one of the preceding claims, **characterized in that** a temperature sensor (530) is provided for determining the temperature of the reaction liquid (505).

23. An apparatus according to claim 22, **characterized in that** the temperature sensor is arranged in a channellike indentation (529) provided in the area of the lower end of a reaction vessel (504) which is arranged in said pressure vessel and in which the reaction liquid can be provided in a lower area thereof.

24. An apparatus according to claim 22 or 23, **characterized in that** said temperature sensor (530) is a thermocouple, a resistance sensor, an infrared sensor or a fibre optics with fluorescence measurement.

25. An apparatus according to one of the preceding claims, **characterized in that** a discharge conduit (227) is provided by means of which the reaction liquid can be discharged, said discharge conduit (227) leading into the interior of the pressure vessel and extending from the bottom of a receptacle for the reaction liquid.

26. An apparatus according to one of the preceding claims, **characterized in that** a suction conduit (70, 170, 270) is provided for generating a partial vacuum, said suction conduit leading into the interior of the pressure vessel.

## Revendications

1. Dispositif pour réaliser des réactions chimiques par voie humide sous surpression comportant
un réservoir à pression (1), dans lequel peut être prévu un liquide de réaction (5) et qui peut être fermé d'une façon étanche sous pression par un moyen d'obturation (2, 3), **caractérisé en ce**
**qu'**un dispositif de lavage est prévu pour laver le réservoir à pression par vidange de produits de réaction gazeux hors du réservoir à pression se trouvant en surpression, et
un dispositif (17, 42, 14) permettant de maintenir une charge de surpression prédéfinie pendant le lavage.

2. Dispositif selon la revendication 1, **caractérisé en ce que** le dispositif de lavage comprend une source (35) d'un gaz sous pression, ainsi qu'une première conduite de gaz (12) reliant la source (35) à l'intérieur du réservoir à pression, et en outre une seconde conduite de gaz (36) sortant du réservoir à pression et équipée d'un premier restricteur (14) permettant de générer une première vitesse d'écoulement prédéfinie.

3. Dispositif selon la revendication 2, **caractérisé en ce qu'**est prévu dans la première conduite de gaz (12) un second restricteur (17) destiné à générer une seconde vitesse d'écoulement prédéfinie.

4. Dispositif selon la revendication 2, **caractérisé en ce qu'**une soupape de réglage de pression (42) est prévue dans la première conduite de gaz (12) pour ajuster la pression du gaz se trouvant sous pression à une valeur prédéfinie.

5. Dispositif selon l'une des revendications précédentes, **caractérisé en ce qu'**un dispositif de recondensation est prévu au sein du réservoir à pression pour condenser le liquide de réaction évaporé.

6. Dispositif selon la revendication 5, **caractérisé en ce que** le dispositif de recondensation comporte un corps de refroidissement (6) qui peut être refroidi à une température telle que le liquide de réaction évaporé condense.

7. Dispositif selon la revendication 6, **caractérisé en ce que** le corps de refroidissement peut être rempli avec un liquide de refroidissement.

8. Dispositif selon la revendication 7, **caractérisé en ce que** le liquide de refroidissement peut être mis à circuler à travers le corps de refroidissement.

9. Dispositif selon la revendication 7 ou 8, **caractérisé en ce que** le liquide de refroidissement peut être retiré du corps de refroidissement.

10. Dispositif selon la revendication 9, **caractérisé en ce qu'**est prévue une conduite d'aspiration (10) destinée à retirer le liquide de refroidissement du corps de refroidissement.

11. Dispositif selon la revendication 5, **caractérisé en ce que** le dispositif de recondensation comporte un moyen (131, 137) permettant le soufflage avec un jet gazeux réfrigérant sur une zone supérieure, par rapport à la direction de la force de gravité, d'un réacteur (104) qui est disposé dans le réservoir à pression et dans lequel le liquide de réaction peut être prévu dans une zone inférieure.

12. Dispositif selon la revendication 11, **caractérisé en ce que** le moyen de soufflage avec un jet gazeux réfrigérant comporte une source (137) de gaz réfrigérant et des conduites d'amenée et de décharge (131) du gaz réfrigérant, ainsi que des moyens (139, 140) de séparation étanche au gaz d'une première partie du réservoir à pression, dans laquelle se trouve la zone du réacteur entourée du gaz réfrigérant, de la partie restante du réservoir à pression.

13. Dispositif selon l'une des revendications précédentes, **caractérisé en ce qu'**un dispositif de chauffage destiné à augmenter la température du liquide de réaction (5) est prévu.

14. Dispositif selon la revendication 13, **caractérisé en ce que** le dispositif de chauffage comprend un générateur d'hyperfréquence (32) permettant de générer un champ hyperfréquence (15) traversant le liquide de réaction (5).

15. Dispositif selon la revendication 14, **caractérisé en ce que** le champ hyperfréquence peut être généré au moins dans une zone du réservoir à pression dans laquelle le liquide de réaction peut être prévu, et **en ce que** les parois du réservoir à pression sont transparentes aux micro-ondes dans cette zone.

16. Dispositif selon la revendication 1, **caractérisé en ce qu'**un réacteur est prévu dans le réservoir à pression pour loger le liquide de réaction.

17. Dispositif selon la revendication 16, **caractérisé en ce que** les parois du réacteur sont fabriquées en PTFE, en PFA, en PTFE-TFM ou en verre quartzeux.

18. Dispositif selon l'une des revendications précédentes, **caractérisé en ce qu'**est prévu un dispositif d'alimentation permettant de charger des substances de réaction gazeuses ou liquides à l'intérieur du réservoir à pression par le moyen d'obturation (2, 3) lors de la fermeture étanche sous pression.

19. Dispositif selon la revendication 18, **caractérisé en ce que** le dispositif d'alimentation comprend une soupape à plusieurs voies (220) avec boucle d'échantillonnage (221), qui peut être commutée dans au moins une première et une seconde positions, afin de capter une substance à charger sous une pression pouvant être présélectionnée, dans la boucle d'échantillonnage selon la première position, et afin de charger la substance captée dans le réservoir à pression se trouvant sous pression selon la seconde position.

20. Dispositif selon la revendication 19, **caractérisé en ce que**, dans la seconde position de la soupape à plusieurs voies, une extrémité de la boucle d'échantillonnage est reliée à une source (235) d'un gaz de lavage se trouvant sous pression, et l'autre extrémité de la boucle d'échantillonnage est reliée à une conduite (225) menant dans le réservoir à pression.

21. Dispositif selon l'une des revendications 19 ou 20, **caractérisé en ce que**, dans la première position ou dans une autre troisième position, des réactifs gazeux peuvent être introduits dans le réacteur selon une vitesse d'écoulement pouvant être pré-ajustée.

22. Dispositif selon l'une des revendications précédentes, **caractérisé en ce qu'**est prévu un détecteur de température (530) pour déterminer la température du liquide de réaction (505).

23. Dispositif selon la revendication 22, **caractérisé en ce que** le détecteur de température est disposé dans une anse (529) en forme de tunnel dans la zone de l'extrémité inférieure d'un réacteur (504), qui est disposé dans le réservoir à pression et dans lequel peut être prévu le liquide de réaction dans une zone inférieure.

24. Dispositif selon la revendication 22 ou 23, **caractérisé en ce que** le détecteur de température (530) est un thermocouple, une sonde à résistance, un détecteur infrarouge ou une optique à fibres de verre avec mesure de fluorescence.

25. Dispositif selon l'une des revendications précédentes, **caractérisé en ce qu'**est prévue une conduite d'évacuation (227) menant dans l'intérieur du réservoir à pression et parvenant au fond d'un réservoir de réception du liquide de réaction, grâce à laquelle le liquide de réaction peut être évacué.

26. Dispositif selon l'une des revendications précédentes, **caractérisé en ce qu'**est prévue une conduite d'aspiration (70, 170, 270), menant à l'intérieur du réservoir à pression et permettant de générer une dépression.
